Europäisches Patentamt

(19) European Patent Office

Office européen des brevets

(11) Publication number: **0 434 274 A2**

# (12) EUROPEAN PATENT APPLICATION

(21) Application number: 90313413.8

(22) Date of filing: 11.12.90

(51) Int. Cl.⁵: **C09K 17/00**, C04B 28/18, E21B 33/13

(30) Priority: 12.12.89 NO 894979

(43) Date of publication of application:
26.06.91 Bulletin 91/26

(84) Designated Contracting States:
AT BE CH DE DK ES FR GB GR IT LI NL SE

(71) Applicant: ELKEM MATERIALS A/S
P.O. Box 126, Vaagsbygd
N-4602 Kristiansand S (NO)

(72) Inventor: Dingsoyr, Eldar O.
Tjonneheia 1
N-4640 Sogne (NO)

(74) Representative: Rees, David Christopher et al
Kilburn & Strode 30 John Street
London WC1N 2DD (GB)

(54) Injectable grout.

(57)    The present invention relates to an injectable grout for consolidation and/or waterproofing of fissured soil or rock and comprises slaked lime, microsilica and water. The grout further contains 10 to 100% of an alkali metal aluminate, based on the weight of slaked lime, as a curing accelerator.

EP 0 434 274 A2

## INJECTABLE GROUT

The present invention relates to an injectable grout comprising slaked lime and microsilica for consolidating and/or waterproofing fine granular soils and finely fissured soils, rocks and concrete. Such injectable grout for consolidation of soils and fissured rock comprising slaked lime microsilica are known from Norwegian Patent application No. 854033 and Swedish published Patent application No. 452455.

The grout according to the Norwegian Patent application comprises fine particles of amorphous silicon dioxide (microsilica) and fine particles of slaked lime, where the weight of ratio between lime and microsilica is in the range between 0.2 to 5 and where the grout contains up to 350 kg solid material per cubic metre. In the Norwegian application no particulars for the thickening time and setting time for the grout are given, but it is stated that it may be desirable to use an accelerator for developing the setting reaction in cases where it is desired to shorten the period before loading of the injected soil. It is mentioned that as accelerator a basic substance, such as NaOH, sodium silicates, sodium carbonate, potassium hydroxide, or the like can be used. According to the Norwegian Patent application the accelerator may be incorporated in an amount up to 5% based on the weight of lime.

The Swedish published Patent application No. 452455 relates to a consolidation grout comprising a mixture of slaked lime and microsilica where the weight ratio between slaked lime and microsilica is between 1 : 1 and 4 : 1 and that powdery water reducing agents are added in an amount of 0-5% by weight. In this reference the use of curing accelerator is not mentioned, nor is anything stated about the thickening time and setting time for the grout.

The injectable grouts described in this prior art have the disadvantage that the thickening time and the setting time are very long. Without the addition of a curing accelerator the setting time will be about 50 hours. It has further been found that even with addition of the preferred curing accelerator according to Norwegian Patent application No. 854053, namely, NaOH, in an amount of above 10% based on weight of lime, it is only possible to obtain a reduction in the setting time to about 24 hours, while the apparent viscosity during the first two hours after mixing is not altered.

For the purposes where a quick setting-and curing time is important, the grouts according to the state of art cannot be used, even if a curing accelerator is added in an amount far above the amount suggested in Norwegian Patent application No. 854053. For the propagation speed of injection works it is important that the injection grouts set rapidly. Ideally the grout should have a low viscosity as long as the injection process is in progress and the grout should start to thicken and to set at the end of the injection process.

Accordingly, the present invention relates to an injectable grout for consolidation and/or waterproofing of finely fissured soils comprising slaked lime and microsilica, characterised in that the grout additionally contains between 10 and 100% by weight of an alkali metal aluminate, based on the weight of the lime, as a curing accelerator.

It has surprisingly been found that addition of high amounts of alkali metal aluminates makes it possible to reduce the thickening-and setting times of grouts of the above-mentioned type to a substantial degree, without affecting the viscosity in the first period after mixing.

According to the preferred embodiment the injectable grout contains 20 to 75% by weight of an alkali metal aluminate based on the weight of slaked lime.

A preferred alkali metal aluminate is sodium aluminate. Sodium aluminate can be used both in the form of dry powder and as a solution in water. It is especially preferred to use an alkali metal aluminate containing 40-42% $Na_2O$ and 52-54% $Al_2O_3$.

The slaked lime has preferably a particle size of less than 3 um and a specific surface are of at least 8000 $cm^2/g$.

The microsilica which is used in the grout according to the present invention comprises extremely small spherical, amorphous particles containing at least 85% by weight of $SiO_2$. The specific surface area is between 15 and 30 $m^2/g$ and the particles have a diameter between 0.1 and 0.2 um.

Microsilica is normally obtained from off-gases from electric smelting furnaces used for the production of silicon and ferrosilicon, but can also be produced by the reduction of $SiO_2$ to SiO-gas and the reoxidation of SiO in air.

The weight ratio between lime and microsilica in the grout is preferably between 0.2 and 5 more preferably between 0.5 and 3 and the ratio between water and lime + microsilica in the grout is between 1 and 6, preferably between 3 and 5.

Water-reducing agents may be added to the grout. The water-reducing agents may be water-reducing agents which are known to be used in ordinary concrete, such as melamine derivates.

It has surprisingly been found that the grout according to the present invention has a substantially lower setting time compared to known grouts, while at the same time the injectable grout according to the present invention has a viscosity before setting which is as low as the viscosity of the known grouts.

Example

Four grouts, A, B, C, D, were produced having the compositions shown in Table I. Grouts A and B have compositions according to the present invention, while grouts C and D have compositions according to the state of the art. THe grout C is without curing accelerator while grout D contains NaOH in an amount of 11.5% based on the weight of slaked lime.

## TABLE I

|  | A grams | B grams | C grams | D grams |
|---|---|---|---|---|
| Slaked lime less than 3 $\mu$m | 46.6 | 108.2 | 46.6 | 46.6 |
| Microsilica slurry 50 % | 124.2 | 72.2 | 124.2 | 124.2 |
| NaOH | - | - | - | 5.4 |
| Sodium aluminate | 21.7 | 28.9 | - | - |
| Water reducing agent | - | - | - | - |
| Peramin F | - | 1.0 ml | - | - |
| Water | 481.3 | 468.8 | 481.3 | 481.3 |

The microsilica slurry used comprised 50% by weight of microsilica and 50% by weight of water. Peramin F is a water reducing agent consisting of a sulphonated melamine formaldehyde condensate and is produced by Perstorp AB, Sweden.

The grouts were mixed in a Warring mixer operating at top speed for 35 seconds to thin slurries. The viscosity of each slurry was measured using a rheometer from Baroid NL, USA.

The development of viscosity versus time is shown in Table II.

## TABLE II

| Time after mixing in min. | A viscosity cp | B viscosity cp | C viscosity cp | D viscosity cp |
|---|---|---|---|---|
| 1 | 15 | 12 | 18 | 20 |
| 15 | 23 | 18 | 15 | 16 |
| 30 | 47 | 23 | 14 | 16 |
| 45 | Too thick for measuring | 41 | 14 | 16 |
| 120 | " | - | - | - |
| Setting time | 40 minutes | 4 hours | about 50 hours | 16 hours |

From the results in Table II it can be seen for grouts C and D, according to the state of the art, no change in viscosity was found even two hours after mixing. Table II further shows that grouts A and B according to the present invention were generally as thin as the slurries C and D up to the first 30 minutes after mixing, after which the air viscosity increased rapidly. The setting time for grouts A and B was 40 minutes and 4 hours respectively.

From this example it can clearly be seen that the thickening and setting time for the grouts according to the present invention are substantially lower than what is known from the prior art. It should be appreciated that grout D contains the preferred curing accelerator according to the Norwegian Patent application No. 854053 in an amount of about 11.5% based on the weight of lime, which is substantially higher than the amount prescribed in the Norwegian Patent application.

## Claims

1. Injectable grout for consolidation and/or waterproofing of fissured soil, containing slaked lime, microsilica and water, characterised in that the grout further contains 10 to 100% of an alkali metal aluminate, based on the weight of slaked lime, as a curing accelerator.

2. Injectable grout as claimed in Claim 1, characterised in that the grout contains 20 to 75% alkali metal aluminate based on the weight of slaked lime.

3. Injectable grout as claimed in Claims 1 or Claims 2, characterised in that the alkali metal aluminate is sodium aluminate.

4. Injectable grout as claimed in any preceding Claim, characterised in that the weight ratio between slaked lime and microsilica is between 0.2 and 5, preferably between 0.5 and 3.

5. Injectable grout as claimed in any preceding Claim, characterised in that the ratio between water and slaked lime plus microsilica is between 1 and 6, preferably between 3 and 5.